# Europäisches Patentamt

## European Patent Office

## Office européen des brevets

(19)

(11) Veröffentlichungsnummer: **0 139 940**
**B1**

(12) **EUROPÄISCHE PATENTSCHRIFT**

(45) Veröffentlichungstag der Patentschrift:
**26.10.88**

(51) Int. Cl.⁴: **A 01 D 34/66**

(21) Anmeldenummer: **84109560.7**

(22) Anmeldetag: **10.08.84**

(54) **Mähwerk.**

(30) Priorität: **03.10.83 DE 3335881**

(43) Veröffentlichungstag der Anmeldung:
**08.05.85 Patentblatt 85/19**

(45) Bekanntmachung des Hinweises auf die Patenterteilung:
**26.10.88 Patentblatt 88/43**

(84) Benannte Vertragsstaaten:
**AT BE CH FR GB IT LI NL**

(56) Entgegenhaltungen:
**EP - A - 0 070 585**
**AT - B - 269 536**
**DE - A - 2 423 039**
**DE - A - 2 640 704**
**DE - A - 2 800 500**
**US - A - 4 343 138**

(73) Patentinhaber: **Klöckner-Humboldt-Deutz AG**
**Zweigniederlassung Fahr, D-7702 Gottmadingen (DE)**

(72) Erfinder: **Preyss, Ulrich, Am Sandbuck 3,**
**D-7702 Gottmadingen (DE)**
Erfinder: **Glunk, Josef, Schienerbergstrasse 11,**
**D-7702 Gottmadingen (DE)**
Erfinder: **Maier, Martin, Hilzingerstrasse 23,**
**D-7702 Gottmadingen (DE)**
Erfinder: **van Kampen, Armin, Schlosshaldenstrasse 24,**
**D-Radolfzell-Stahringen (DE)**

(74) Vertreter: **Haft, Berngruber, Czybulka,**
**Postfach 14 02 46 Hans-Sachs-Strasse 5,**
**D-8000 München 5 (DE)**

**Beschreibung**

Die Erfindung betrifft ein Mähwerk, bestehend aus einem im wesentlichen waagrechten Tragbalken mit mindestens zwei um im wesentlichen von oben nach unten sich erstreckende Achsen rotierenden gegenläufig angetriebenen Mähorganen, mit einem Hauptantriebs-Winkelgetriebe, das über eine Kardanwellenverbindung von der Zapfwelle eines Schleppers antreibbar ist, mit weiteren Antrieben sowie Abtriebswellen für jedes Mähorgan und mit einem Dreipunkt-Anbaubock mit senkrechter Schwenkachse zum Verschwenken aus der sich in Schlepperlängsrichtung nach hinten erstreckenden Transportlage in die sich quer zum Schlepper erstreckenden Arbeitslage, wobei die Abtriebswellen die Achsen bilden.

Derartige Mähwerke werden in der Landwirtschaft hauptsächlich zum Ernten von Grünfutter eingesetzt. Um nun insbesondere bei Kreiselmähern oder Scheibenmähern mit geringerem Scheibendurchmesser einen sogenannten tiefen Schnitt zu erzielen, d.h. einen Schnitt des Grünfutters dicht über dem Boden, ist es bekannt, die Maschine etwas nach vorne zu neigen durch Verkürzen des Oberlenkers, der einen Teil der Verbindung mit dem Anbaubock des Schleppers darstellt. Dieses Verkürzen des Oberlenkers ist jedoch nicht ganz unproblematisch. Zum einen wird die Kardan-Gelenkverbindung zwischen Schlepper und Kreiselmäher aus ihrer Z-Beuge gebracht, wodurch eine Massenungleichförmigkeit auftritt, die zu starken Schwingungen im Antriebssystem führt.

Zum anderen muss beim Umschwenken des Mähwerks von der Transportlage in die Arbeitslage und umgekehrt eine erhebliche Kraft aufgewandt werden, da die Schwenkachse nicht mehr senkrecht steht.

Bei der Ankupplung eines relativ schweren, weit ausragenden Kreiselmähers, der sich in Arbeitslage quer zum Schlepper erstreckt und durch Anheben und anschliessendes Verschwenken derart, dass er sich vom Schlepper aus nach hinten erstreckt, in eine Transportlage gebracht werden muss, ist es lange Zeit erforderlich gewesen, das Umstellen aus der Arbeitslage in die Transportlage und umgekehrt, mit grossem Kraftaufwand durchzuführen, da die Hebearme der üblichen Dreipunkt-Anbaubockvorrichtungen derart ausgelegt sind, dass der Dreipunkt-Anbaubock durch die Hebebewegung etwas nach vorne gekippt wird, so dass der sich nach hinten erstreckende Kreiselmäher mit ziemlicher Kraft bestrebt ist, nach vorne zu schwenken, wodurch eine nicht unerhebliche Verletzungsgefahr bestand.

Aus der AT-B-350 314 ist ein Dreipunkt-Anbaubock für eine durch eine im wesentlichen vertikale Schwenkachse mit dem Anbaubock verbundene Landmaschine, beispielsweise einen Kreiselmäher, bekannt geworden, bei dem das Umstellen von der Transportlage in die Arbeitslage dadurch erleichtert wird, dass die Richtung der Schwenkachse des Dreipunkt-Anbaubockes gegenüber den drei Ankupplungspunkten der Dreipunkt-Ankupplungsvorrichtung derart ausgelegt ist, dass die Schwenkachse mit der Schlepperfahrtrichtung bei Arbeitslage der Landmaschine einen Winkel von mehr als 90° einschliesst. Durch den derart ausgebildeten Dreipunkt-Anbaubock entfällt das Bestreben der angehobenen Landmaschine, sich durch ihr eigenes Gewicht in Richtung der Querlage zu verschwenken, weil nun bei angehobener Landmaschine die Schwenkachse praktisch genau senkrecht steht. In Arbeitslage hingegen ist die Schwenkachse dabei leicht nach hinten geneigt. In dieser Stellung ist jedoch kein tiefer Schnitt zu erzielen, da die Schneidteller der Mähtrommeln parallel zum Boden angeordnet sind. Wollte man einen sogenannten tiefen Schnitt durchführen, so müsste auch in diesem Fall der Oberlenker nach vorne geneigt werden, wodurch die bereits oben genannten Nachteile auftreten.

Aus der AT-B-269 563 ist eine Vorrichtung zum seitlichen Aufhängen eines Mähbalkens mit um eine nahezu lotrechte Achse umlaufenden Schneidwerkzeugen an einem Schlepper bekannt, mit einer Dreipunkt-Aufhängung, an der ein Zwischenrahmen angelenkt ist, wobei ein sich seitlich erstreckender Zwischenbalken einerseits am Zwischenrahmen und andererseits am Mähbalken angelenkt ist und sich eine Zugverbindung vom Mähbalken zum Zwischenrahmen erstreckt. Damit wird ermöglicht, den Mähbalken so anheben zu können, dass er seine waagrechte Lage beibehält. Die Dreipunkt-Aufhängung des Schleppers, die eine obere längsverstellbare Verbindungsstange aufweist, ist mit einem dreieckigen Rahmen gelenkig gekuppelt, so dass dieser durch Heben der Arme in einer etwa lotrechten Ebene heb- und senkbar ist. Zur Einstellung der Mähhöhe kann nun durch eine Längenverstellung dieser Verbindungsstange der Mähbalken derart schräg gestellt werden, dass die Schneidscheibenachsen schräg nach hinten und nach unten gerichtet sind, so dass der vordere Umfangsbereich der Schneidscheiben dichter an den Boden herankommt.

Auch hier ist also für den sogenannten tiefen Schnitt des Erntegutes die Mähmaschine durch Verkürzen des Oberlenkers nach vorne zu neigen, wodurch auch bei dieser bekannten Vorrichtung die Kardan-Gelenkverbindung zwischen Schlepper und Mähwerk aus ihrer Z-Beuge gebracht wird und demzufolge nicht unerhebliche Massenungleichförmigkeiten auftreten, die zu starken Schwingungen im Antriebssystem führen. Die Schneidscheibenachsen gemäss dieser bekannten Vorrichtung verbleiben in jeder Stellung parallel zur Schwenkachse der Aufhängung.

Aufgabe der vorliegenden Erfindung ist es, ein Mähwerk dahingehend zu verbessern, dass mit ihm ein tiefer Schnitt erzielbar ist und damit ein besserer Abtransport des geschnittenen Erntegutes ermöglicht wird, ohne eine Veränderung der Kardanwellenverbindung zwischen dem Schlepper und dem Mähwerk und unter Beibehaltung der leichten Verschwenkbarkeit aus der Arbeitslage in die Transportlage.

Ausgehend von einem Mähwerk der eingangs näher genannten Art erfolgt die Lösung dieser Aufgabe dadurch, dass die Abtriebswellen der Mähorgane in Arbeitslage des Mähwerks denselben Winkel (α) mit einer vertikalen Ebene einschliessen, die die senkrechte Schwenkachse des Dreipunkt-Anbaubockes enthält und die sich quer zur Fahrtrichtung des Mähwerks erstreckt, so dass die Abtriebswellen in Fahrtrichtung des Mähwerks gesehen schräg nach hinten zeigen und in Ebenen parallel zur Ebene der Schlepperlängsrichtung und parallel zueinander liegen.

Vorteilhafterweise beträgt der Winkel zwischen 5 und 25°.

Durch die erfindungsgemäss vorgesehene, leicht schräg nach hinten geneigt angeordnete Abtriebswelle des Hauptantrieb-Winkelgetriebes kann der Riementrieb für den Antrieb der einzelnen Mähorgane genau waagrecht gehalten werden und die vertikale Schwenkachse des Dreipunkt-Anbaubockes genau senkrecht zum Erdboden eingestellt bleiben, da die insbesondere für kleinere Trommel- bzw. Scheibendurchmesser erforderliche Neigung der Mähorgane zum Erdboden zur Erzielung eines tiefen Schnittes formschlüssig erzielt wird.

Die Kardan-Gelenkwellenverbindung zwischen Schlepper und Mähwerk bleibt hierbei unverändert, so dass keinerlei Massenungleichförmigkeiten in der Drehbewegung dieser Gelenkwellenverbindung auftreten können.

Gleichzeitig wird der Vorteil erzielt, dass der Kraftaufwand beim Verschwenken des Mähwerkes von der Arbeitslage in die Transportlage so gering ist, dass das Verschwenken leicht von einer Person ohne Verletzungsgefahr durchgeführt werden kann. Eine Verkürzung des Oberlenkers ist also nicht mehr nötig.

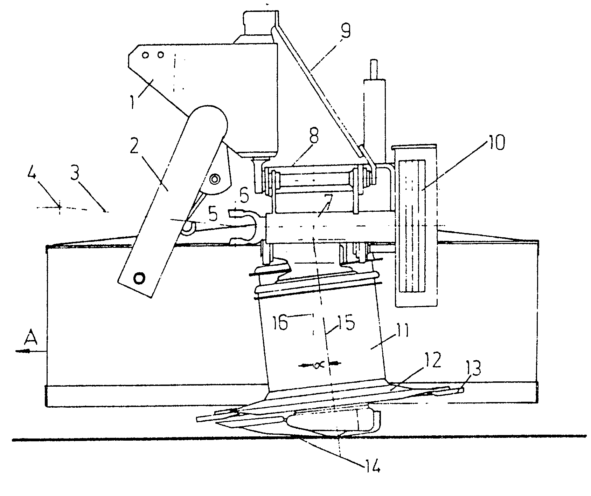

Im folgenden wird die Erfindung anhand der Zeichnung näher erläutert, in der ein vorteilhaftes Ausführungsbeispiel dargestellt ist.

Bei dem in der einzigen Figur schematisch dargestellten Mähwerk handelt es sich um eine Seitenansicht eines Scheiben-Trommel-Mähwerks in seiner Arbeitslage. Die Fortbewegungsrichtung ist durch den Pfeil A angedeutet, wobei das Mähwerk über einen Dreipunkt-Anbaubock 1, 2 mit einem nicht dargestellten Schlepper verbunden ist. Die Übertragung der Antriebskraft von der Zapfwelle des Schleppers erfolgt mittels einer Kardanwellenverbindung, die mit 3 angedeutet ist. Wie man sieht, weist diese Verbindung, die als Z-Trieb ausgebildet ist, zwei Gelenke 4, 5 auf, da sich die Antriebsklaue 6 des Hauptantriebs-Winkelgetriebes 7 des Mähwerkes nicht auf gleicher Höhe über dem Erdboden wie die Zapfwelle des Schleppers befindet.

Der Dreipunkt-Anbaubock des Mähwerkes ist noch mit einer Strebe 9 mit dem Tragbalken 8 verbunden, an dem ein Riementrieb 10 angeordnet ist, um die Kraft auf alle Mähorgane des Mähwerkes zu übertragen.

Das Mähwerk enthält zwei äussere Mähtrommeln 11, von denen eine dargestellt ist und die z.B. Mähscheiben 12 aufweisen, die mit Mähklingen 13 versehen sind. Zwischen den Mähtrommeln können weitere Mähscheiben vorgesehen sein, die vom Mähbalken 14 angetrieben werden. Zur Erzielung eines tiefen Schnitts und zum besseren Abtransport des geschnittenen Gutes ist es erforderlich, die Mähorgane unter einem Winkel α zur Senkrechten 16 zu neigen, so dass die in Fahrtrichtung gesehen vorne wirksamen Mähklingen einen Schnitt dicht über dem Boden ermöglichen.

Anstatt nun, wie bisher üblich, das Mähwerk in seiner Gesamtheit durch Verkürzung des am Halteteil 1 angeordneten Oberlenkers zu neigen, ist erfindungsgemäss vorgesehen, dass bereits die Abtriebswelle des Hauptantriebs-Winkelgetriebes 7 unter einem Winkel α zur Senkrechten 16 angeordnet ist und ebenfalls sämtliche Abtriebswellen für die anderen Organe des Mähwerks. Die einzelnen Abtriebswellen liegen dabei in Ebenen parallel zu der Ebene der Schlepperlängsrichtung und parallel zueinander und weisen alle den gleichen Neigungswinkel α auf.

Das heisst also, dass alle Mähorgane unter einem gleichen Winkel zur Senkrechten 16 angeordnet sind und dass ihre Achsen 15, die mit den Abtriebswellen zusammenfallen, denselben Winkel α mit der Vertikalebene einschliessen, die die senkrechte Schwenkachse des Dreipunkt-Anbaubocks 1, 2 enthält und die sich quer zur Fahrtrichtung A des Mähwerks erstreckt. Zu diesem Zweck ist das Oberteil einer jeden Mähtrommel 11 geneigt am Unterteil des Tragbalkens 8 angeordnet, so dass die Neigung der Mähtrommel konstruktiv in das Getriebegehäuse eingebracht ist. Dabei stehen die Achswinkel der Verzahnung nicht mehr im rechten Winkel zueinander. Die Schwenkstellung des Eingangsgetriebes ist dabei davon abhängig, wie hoch der Tragbalken angeordnet ist.

Durch die erfindungsgemässe, leicht schräg nach hinten geneigte Anordnung von Abtriebswellen und Mähorganen kann der Riementrieb 10 weiterhin genau waagrecht angeordnet bleiben und die vertikale Schwenkachse des Dreipunkt-Anbaubocks genau vertikal ausgerichtet bleiben. Man sieht ferner, dass die Gelenkwellenbeugung an den beiden Gelenken 4, 5 der Kardanwellenverbindung 3 gleich gross bleibt, so dass keinerlei Ungleichförmigkeiten der Drehbewegung der Kardanwellenverbindung 3 mehr auftreten können.

Der Neigungswinkel α, unter dem die Abtriebswellen und die Mähorgane angeordnet sind, beträgt vorzugsweise zwischen 5 und 25°.

Die bisher auftretenden Schwierigkeiten mit Ungleichförmigkeiten bei der Drehbewegung der Kardanwellenverbindung werden also vermieden bei gleichzeitiger Aufrechterhaltung der Vorteile eines geringen Kraftaufwandes beim Verschwenken des Mähwerks von der Arbeitslage in die Transportlage, da die vertikale Schwenkachse beibehalten wird.

**Patentansprüche**

1. Mähwerk (14), bestehend aus einem im wesentlichen waagrechten Tragbalken (8) mit mindestens zwei um im wesentlichen von oben nach unten sich erstreckende Achsen rotierenden gegenläufig angetriebenen Mähorganen (11), mit einem Hauptantriebs-Winkelgetriebe (7), das über eine Kardanwellenverbindung (3) von der Zapfwelle eines Schleppers antreibbar ist, mit weiteren Antrieben sowie Abtriebswellen (15) für jedes Mähorgan und mit einem Dreipunkt-Anbaubock (1, 2) mit senkrechter Schwenkachse zum Verschwenken aus der sich in Schlepperlängsrichtung nach hinten erstreckenden Transportlage in die sich quer zum Schlepper erstreckenden Arbeitslage, wobei die Abtriebswellen (15) die Achsen bilden, dadurch gekennzeichnet, dass die Abtriebswellen (15) der Mähorgane in Arbeitslage des Mähwerkes denselben Winkel (α) mit einer vertikalen Ebene einschliessen, die die senkrechte Schwenkachse des Dreipunkt-Anbaubocks enthält und die sich quer zur Fahrtrichtung (A) des Mähwerks erstreckt, so dass die Abtriebswellen (15) in Fahrtrichtung (A) des Mähwerks gesehen schräg nach hinten zeigen und in Ebenen parallel zur Ebene der Schlepperlängsrichtung und parallel zueinander liegen.

2. Mähwerk nach Anspruch 1, dadurch gekennzeichnet, dass der Winkel (α) zwischen 5 und 25° liegt.

### Claims

1. Mower (14), comprising a substantially horizontal supporting beam (8) with at least two mowing components (11), which are driven in opposite directions and rotatable about axles substantially extending from top to bottom, with a main driving mitre gear (7) which is drivable by the power take-off shaft of a tractor via a cardan shaft connection (3), with additional drives and output shafts (15) for each mowing component, and a three-point attachment frame (1, 2) with a vertical pivotal axle for the pivotal movement from the travelling position, extending rearwardly in the longitudinal direction of the tractor, into the operative position extending transversely relative to the tractor, the output shafts (15) forming the axles, characterised in that the output shafts (15) of the mowing components in the operative position of the mower subtend the same angle (α) with respect to a vertical plane, which includes the vertical pivotal axle of the three-point attachment block and extends transversely relative to the direction of travel (A) of the mower, so that the output shafts (15), when viewed with respect to the direction of travel (A) of the mower, are orientated inclined rearwardly and are situated in planes parallel to the plane of the longitudinal direction of the tractor and parallel to one another.

2. Mower according to claim 1, characterised in that the angle (α) is between 5 and 25°.

### Revendications

1. Faucheuse (14) consistant en une barre de support (8) sensiblement horizontale avec au moins deux organes de coupe (11) entraînés en rotation en sens contraire autour d'axes s'étendant sensiblement du haut jusqu'en bas, avec un engrenage conique d'entraînement principal (7), qui peut être entraîné par la prise de force d'un tracteur par l'intermédiaire d'une liaison à arbre de transmission (3), avec d'autres entraînements ainsi que des arbres menés (15) pour chaque organe de coupe et avec un support rapporté à trois points (1, 2) d'axe de pivotement vertical pour le pivotement depuis la position de transport qui s'étend vers l'arrière par rapport à la direction longitudinale du tracteur jusque dans la position de travail qui s'étend en biais par rapport au tracteur, les arbres menés (15) formant les axes, caractérisée en ce que les arbres menés (15) des organes de coupe forment, dans la position de travail de la faucheuse, le même angle α avec un plan vertical qui contient l'axe de pivotement vertical du support rapporté à trois points et qui s'étend en biais par rapport au sens de déplacement (A) de la faucheuse, de sorte que les arbres menés (15) sont inclinés vers l'arrière par rapport à la direction de déplacement (A) de la faucheuse et se trouvent dans des plans parallèles au plan de la direction longitudinale du tracteur et parallèles entre eux.

2. Faucheuse selon la revendication 1, caractérisée en ce que l'angle α est compris entre 5 et 25°.